(19) Europäisches Patentamt
European Patent Office
Office européen des brevets

(11) **EP 4 131 080 A1**

(12) **EUROPEAN PATENT APPLICATION**

(43) Date of publication:
**08.02.2023 Bulletin 2023/06**

(51) International Patent Classification (IPC):
***G06N 3/08*** *(2000.01)* ***G06N 3/04*** *(2000.01)*

(21) Application number: **21306096.5**

(52) Cooperative Patent Classification (CPC):
**G06N 3/082;** G06N 3/045

(22) Date of filing: **05.08.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Datakalab**
**92110 Clichy (FR)**

(72) Inventors:
• **YVINEC, Edouard**
**Paris (FR)**
• **DAPOGNY, Arnaud**
**Paris (FR)**
• **BAILLY, Kevin**
**Paris (FR)**
• **FISCHER, Lucas**
**75017 PARIS (FR)**
• **KASSER, Gabbriel**
**Paris (FR)**

(74) Representative: **Bandpay & Greuter**
**30, rue Notre-Dame des Victoires**
**75002 Paris (FR)**

(54) **OPERATION SUPPRESSION FOR COMPUTATION REDUCTION IN NEURAL NETWORK INFERENCE**

(57) The disclosure relates to a computer-implemented method for pruning a neural network which comprises one or more layers each comprising one or more input channels and one or more output channels, each of the one or more layers comprising one or more sub-neurons each comprising one or more respective weights, each sub-neuron outputting an intermediate output. The method comprises: providing a trained neural network, for each layer of neural network, decomposing the one or more sub-neurons into one or more first subsets and one or more second subsets each associated to a first subset, wherein a value of the weight(s) of sub-neuron(s) in each second subset is substantially equal to a value of weights of the respective sub-neurons in the associated first subset, and for each of the one or more second subsets, splitting the trained neural network by removing the second subset of the sub-neurons from the layer; and replacing an intermediate output of the second subset by a substitute of an intermediate output of the associated first subset.

provide a trained neural network — S110

decompose the one or more sub-neurons into one or more first subsets and one or more second subsets each associated to one of the one or more first subsets, wherein a value of the weight(s) of sub-neuron(s) in each second subset is substantially equal to a value of weights of the respective sub-neurons in the associated first subset — S120

remove the second subset of the sub-neurons from the layer — S130

replace an intermediate output of the second subset by a substitute of an intermediate output of the associated first subset, wherein the intermediate output of the second subset corresponds to the intermediate output of the respective sub-neurons of the second subset and the intermediate output of the first subset corresponds to the intermediate output of the respective sub-neurons of the first subset — S140

FIG. 1

EP 4 131 080 A1

## Description

FIELD

Embodiments of the invention relate in general to the field of computer programs and systems, and specifically to a method, system, computer readable storage medium, and computer program for a method for pruning a neural network.

BACKGROUND

A number of methods, systems and programs are offered on the market for pruning neural networks and in particular Deep Neural Networks (DNNs). DNNs are the corner stone of most machine learning solutions in various technical fields, including (but not limited to) Computer Vision (CV) and Natural Language Processing (NLP). In the technical fields of computer vision and image processing deep learning approaches may employ DNNs in segmentation, object detection, object tracking or re-identification, object classification, regression, and/or image generation. In particular, DNNs may use convolutional layers to achieve high performance in object classification, detection, or segmentation. In the field of NLP, DNNs may use architectures such as Recurrent Networks, and Transformers to improve the effectiveness. The deployment of DNNs, however, has been limited by the requirement of high computation power which is more limiting on edge devices.

In response to this need, pruning of DNNs is introduced in order to reduce the computational requirements at inference by searching of a sub-architecture within the original architecture of a DNN. Numerous pruning algorithms have been developed. For example, Yvinec et al., "RED: Looking for Redundancies for Data-Free Structured Compression of Deep Neural Networks", arXiv:2105.14797, May 2021, discloses a data-free structured, unified approach to tackle structured pruning. The document proposes an adaptive hashing of the scalar DNN weight distribution densities to increase the number of identical neurons represented by their weight vectors and prunes the network by merging redundant neurons based on their relative similarities, as defined by their distance. Furthermore, the document, proposes a novel uneven depth-wise separation technique to further prune convolutional layers. Srinivas and Babu, "Data-free Parameter Pruning for Deep Neural Networks", British Machine Vision Conference (BMVC) 2015, discloses a method for pruning the parameters in a trained neural network model. Instead of removing individual weights one at a time, the disclosed method removes one neuron at a time and proposes a systematic way to remove redundant neurons.

The developed pruning methods are either dependent on the architecture of the neural network or heuristic criteria without a theoretical evidence of efficiency (e.g., magnitude-based pruning algorithms) which are not optimal with respect to the changing of the predictive functionality by the pruning. Some of the developed methods may be dependent on multiple hyper-parameters which are hard to tune. Furthermore, some of the pruning algorithms developed so far involve using the data of a training database (i.e., being data driven) which is a crucial concern regarding the ethics and privacy regulations of General Data Protection Regulation (GDPR) which may cause the applications of some solutions on the market to be abandoned.

Within this context, there is still a need for an improved method for pruning a neural network.

BRIEF SUMMARY OF THE INVENTION

It is therefore provided a computer-implemented method for pruning a neural network comprising one or more layers, each of the one or more layers comprising one or more input channels and one or more output channels, each of the one or more layers comprising one or more sub-neurons each comprising one or more mathematical operations and one or more respective weights, each sub-neuron corresponding to a subset of the one or more input channels and outputting an intermediate output contributing to an output channel by an application of the one or more mathematical operations on the subset of the one or more input channels according to the respective one or more weights. The method comprises:

- providing a trained neural network;
- for each of the one or more layers of the provided neural network:

  ∘ decomposing the one or more sub-neurons into one or more first subsets and one or more second subsets each associated to one of the one or more first subsets, wherein a value of the weight(s) of sub-neuron(s) in each second subset is substantially equal to a value of weights of the respective sub-neurons in the associated first subset; and
  ∘ for each of the one or more second subsets, splitting the trained neural network, the splitting comprising:

    ▪ removing the second subset of the sub-neurons from the layer; and
    ▪ replacing an intermediate output of the second subset by a substitute of an intermediate output of the associated first subset, wherein the intermediate output of the second subset corresponds to the intermediate output of the respective sub-neurons of the second subset and the intermediate output of the first subset corresponds to the intermediate output of the respective sub-neurons of the first subset.

The computer-implemented method may comprise one or more of the following features:

- the providing a trained neural network comprises hashing the one or more weights of each of the sub-neurons, preferably the hashing the one or more weights of each of the sub-neurons comprises discretizing each of the one or more weights;

- the sub-neurons of each of the one or more first subsets and each of the respective one or more second subsets correspond to a single input channel;

- the replacing an intermediate output of the second subset by a substitute of an intermediate output of the associated first subset comprises creating a list for each of the one or more first subsets, the list comprising one or more elements each corresponding to one of the one or more associated second subsets, each element of the list comprising: replacing the substitute of the intermediate output of the associated first subset; and a reference to a corresponding output channel;

- for each of the one or more layers of the split neural network: determining if a first list for a first element from the one or more first subsets equals to a second list for a second element from the one or more first subsets, then replacing the second list by a substitute of the first list;

- the replacing an intermediate output of the second subset by a substitute of an intermediate output of the respective first subset comprises storing the respective intermediate output of the first subset in a memory;

- each of the mathematical operations is an addition or a multiplication;

- at least of the one or more layers is a convolutional layer or a fully connected layer;

- fine-tuning the split neural network;

- the fine-tuning comprises further training the split neural network using labelled training data;

- the fine tuning comprises further training the split neural network using un-labelled training data, the training comprises distillation of the split neural network by the provided neural network on the un-labelled training data;

- optimizing an architecture of the split neural network using a Neural Architecture Search (NAS).

It is also provided a computer program comprising instructions for performing the method according to the invention.

It is further provided a processing circuitry configured to carry out the computer program according to the invention.

It is additionally provided a system comprising a processor coupled to a memory and, the memory having recorded thereon the computer program according to the invention.

BRIEF DESCRIPTION OF THE DRAWINGS

FIG. 1 shows a possible sequence of method steps of pruning a neural network;

FIG. 2 shows a possible sequence of method steps of substituting an intermediate output of the second subset of sub-neuron(s) by an intermediate output of the associated first subset of sub-neuron(s);

FIG. 3 shows a schematic example of application of the disclosed pruning method;

FIG. 4 shows an example algorithm for the disclosed pruning method;

FIGs. 5 and 6 show an ablation study of the disclosed method (with an optional hashing) on different trained DNNs;

FIG. 7 shows an ablation study of the disclosed method (with an optional hashing) on DNNs trained on ImageNet with large fully connected layers;

FIG. 8 shows an example of per layer pruning ratios for the disclosed method applied on ResNet 20, 56, 110 and 164 on Cifar10;

FIG. 9 shows a comparison of performance between several structured pruning state-of-the-art pruning methods and an example of the disclosed pruning method (SPLIT) on the canonical benchmark Resnet 50 on ImageNet;

FIG. 10 shows a comparison of performance between several structured pruning state-of-the-art pruning methods and an example of the disclosed pruning method (SPLIT) on the canonical benchmark MobileNet (ImageNet), EfficientNets (ImageNet) and ResNet 56 (Cifar10); and

FIG. 11 is an example of a computerized system.

Similar or functionally similar elements in the figures have been allocated the same reference signs if not otherwise indicated.

## DETAILED DESCRIPTION OF EMBODIMENTS OF THE INVENTION

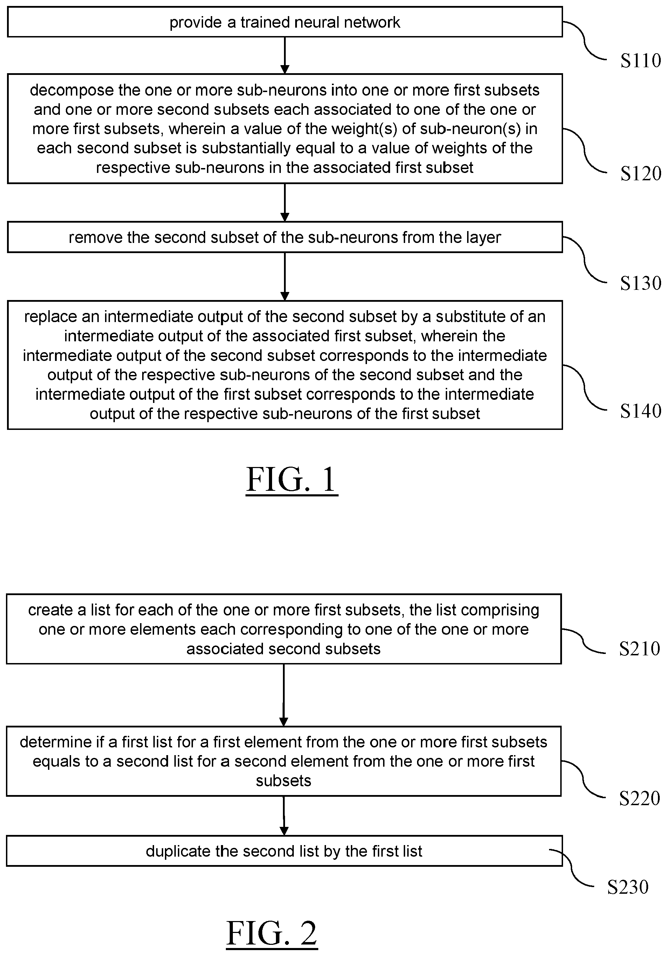

With reference to the flowchart of **FIG. 1,** it is proposed a computer-implemented method for pruning a neural network comprising one or more layers. Each of the one or more layers comprises one or more input channels and one or more output channels. Each of the one or more layers also comprises one or more sub-neurons. Each sub-neuron comprises one or more mathematical operations and one or more respective weights. Each sub-neuron corresponds to a subset (i.e., a fraction) of the one or more input channels. Each sub-neuron outputs an intermediate output contributing to an output channel by an application of the one or more mathematical operations on the subset of the one or more input channels according to the respective one or more weights. The method comprises providing **(S110)** a trained neural network. The method further comprises, for each of the one or more layers of the provided neural network, decomposing (S120) the one or more sub-neurons (of said layer) into one or more first subsets and one or more second subsets. Each of the one or more second subsets is associated to one of the one or more first subsets. Each of the first and the second subset(s) may comprise one or more sub-neurons. A value of the weight(s) of sub-neuron(s) in each second subset is substantially equal to a value of weights of the respective sub-neurons in the associated first subset. The method further comprises, for each of the one or more second subsets, splitting **(S130, S140)** the trained neural network. Splitting and pruning are synonyms and mean the steps that produce a split or pruned neural network. The splitting comprises removing **(S130)** the second subset of the sub-neurons from the layer, and replacing **(S140)** an intermediate output of the second subset by a substitute of an intermediate output of the associated first subset. The intermediate output of the second subset corresponds to the intermediate output of the respective sub-neurons of the second subset and the intermediate output of the first subset corresponds to the intermediate output of the respective sub-neurons of the first subset.

This constitutes an improved method for pruning a neural network, as the method replaces redundant parts (i.e., subsets of sub-neurons) of the provided neural network through comparing the respective weight values of respective sub-neurons of the redundant parts instead of replacing redundant neurons. The method determines if two parts of the neural network (i.e., a first subset and a second subset of sub-neurons) are redundant by determining if the respective weight values of the two parts are significantly equal. The method then removes the redundancy. In other words, two sub-neurons with (substantial) equal weights compute the same intermediate outputs (i.e., features) for all possible inputs in the deployment of the neural network. The method then splits each layer such that the split layer only performs the operation (corresponding to substantial equal weights) once and replaces the result adequately using a substitute. The method is data-free, i.e., the method does the splitting without having access to training or test dataset. Thus, the pruning method allows a fully privacy-compliant procedure. In addition, the method is parameter-free and does not require to tune a hyper-parameter.

The split, or pruned neural network obtained from the method comprises a different architecture for each of the one or more layers compared to the provided neural network after removing and replacing steps **(S130 and S140, respectively).** The layer architecture of the split neural network is defined by a total number of operations instead of the shapes of the input and outputs for the provided (standard) neural network. A layer defined by the total number of operations may form an uneven layer, i.e., the layer does allow different number of operations per input contrary to standard layers with a constant number of operations per input.

Pruning neural networks by removing redundancies is beneficial in deployment of neural networks, for example in image analysis. A trained network is pruned in order to decrease the computational cost. Each subsets of sub-neurons of a neural network outputs an intermediate output. The method replaces one intermediate output of the neural network by a substitute of another intermediate result substantially equal. Hereinafter, the term "substitute" may refer to one or more copies of one or more intermediate results in memory or to one or more references to one or more intermediate results. A substitute may be equivalently called as an access; thus, the intermediate output of the second subset is replaced by accessing the intermediate output of the associated first subset. In other words, the method computes one intermediate output for a subset of sub-neurons (i.e., a first subset) and substitutes the computed intermediate output for any other subset of the sub-neurons which outputs a substantially equal intermediate output, thereby reduces computational resources (e.g., computational time, memory and FLOPs) for computing an intermediate result which is already (substantially) computed. This is in particular beneficial in deployment of the neural network in devices with small memory or computational resources like edge and portable devices and/or in devices which are required to have fast response time such as live cameras. The method of pruning improves the real-time performance of such devices. Further, the pruning method does not comprise providing any data to perform the steps of pruning, i.e., is data-free.

In examples, the pruning may be performed after training the neural network and before the deployment of the neural network for inference.

In examples of the method, the provided trained neural network may admit one or more images as input and is trained to perform an image analysis on a provided input image(s). The input image(s) may be static. Alternatively, the neural network may accept image(s) from a stream of images, for example a real-time video (e.g., from a surveillance camera).

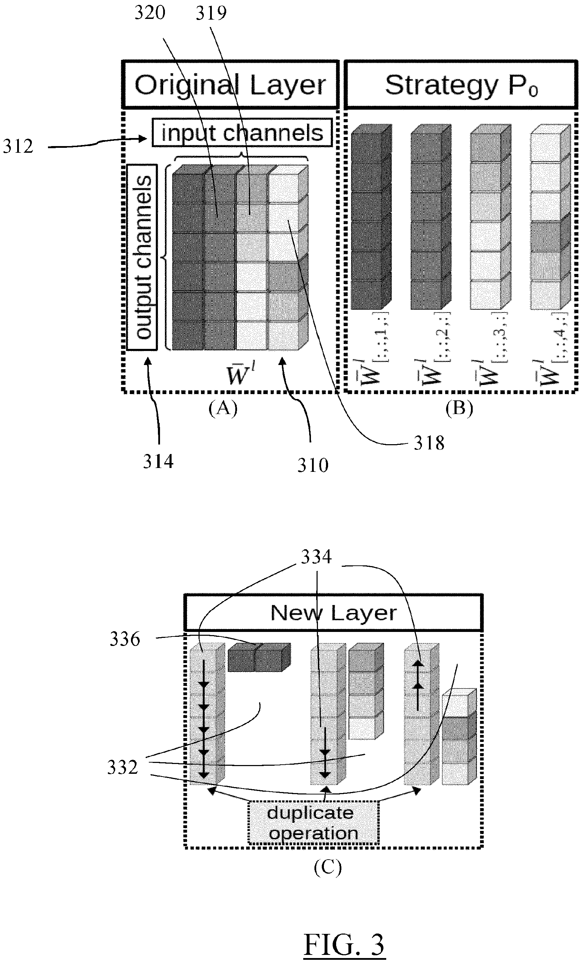

In reference to **FIG. 3** and as known per se, a neural network comprises a set of neurons arranged according to an architecture. The neural network may comprise of one or more layers; here only one layer is represented for the sake of clarity only. Each of the one or more layers comprises one or more input channels and one or more output channels. An input of the each layer may comprise an ensemble of inputs each belongs to one of the one or more input channels and an output of the each layer may comprise an ensemble of outputs each belongs to one of the one or more output channels. In other words, each layer transforms an input to the layer from the one or more input channels to an output in the one or more output channels. Each of the one more input and/or output channels may correspond to one or more properties or features. In examples where the input to the neural network is an image, the one or more inputs and/or output channels may be a respective RGB color property of the input image (e.g., an intensity of red or green in the input image). In **FIG. 3(A),** an example of a layer **310** of a provided neural network is illustrated with input channels **312** and output channels **314.**

As known per se in the field of machine-learning, a neuron is defined as an operation composed of an activation function and one or more mathematical operations over the input from the one or more channels wherein the input comprises an input from the one or more input channels. In other words, each neuron may admit an input from the one or more input channels and apply a respective mathematical operation on the input to obtain a respective output. The neuron may apply a different mathematical operation on each part of the input coming from an input channel. The neuron may further apply a summation over the respective results to obtain the output of the neuron. In examples, the summation may further comprise an application of an activation function to form the output of the neuron. The activation function may be any of the activation function known in the field (e.g., ReLU or a sigmoid activation function). Each of the one or more mathematical operations may be a scalar multiplications (i.e., multiplication between numbers), an addition (e.g., a bias) or an image convolution. Each of the mathematical operation may be defined by data including the weight values of the neuron. By a sub-neuron it is meant a summation of mathematical operations over a subset (i.e., a fraction) of the inputs coming from a respective fraction of the one or more input channels. In other words, each sub-neuron corresponds to a subset of the one or more input channels. As a sub-neuron forms a subset of a neuron it comprises one or more mathematical operations and one or more respective weights. The one or more mathematical operations and the one or more respective weights of each sub-neuron is a subset of one or more mathematical operations and one or more respective weights of a respective neuron.

Further, each sub-neuron may correspond to one of the one or more input channels. Each sub-neuron outputs an intermediate output which contributes to an output channel by an application of the one or more mathematical operations on the subset of the one or more input channels according to the respective one or more weights of the sub-neurons. As a result, a neuron may be defined as application of an activation function over a sum of application of sub-neurons. In other words, the respective neuron of one or more sub-neurons sums the intermediate outputs of the sub-neurons corresponding to each of the one or more input channels and applies an activation function on said sum. Further, a subset of one or more sub-neurons of the neural network corresponding to a same output channel forms a sub-neuron.

In reference to **FIG. 3(A),** a layer **310** of the neural network may be represented by a matrix of 24 blocks (the matrix is of size 4x6) and a sub-neuron may be represented by a fraction of a row in the matrix. In other words, a sub-neurons may be one or more blocks in a same row taking a sub-part of the inputs. For example, the blocks **318, 319,** and **320** may represent a sub-neuron which corresponds to three input channels and one output channel. As another example, each block represented on **FIG. 3(A)** may represent a sub-neuron.

Referring back to **FIG. 1,** the method comprises providing (**S110**) a trained neural network. The neural network may be trained, i.e., learnt, according to any known method in the art. The neural network may be trained on at least one training dataset. In examples, the providing of a trained neural network may comprise providing a training dataset and training the neural network using the provided training dataset, for example according to any known method of supervised learning. Each data piece of the dataset comprises an input to the neural network in relation to one or more respective ground truth values or labels forms a respective potential training sample. The training samples represent the diversity of the situations where the neural network is to be used after being learnt. Any dataset referred herein may comprise a number of training samples higher than 1000, 10000, or 100000. In examples, the dataset may comprise a respective metadata for each of the data pieces.

The method, for each of the one or more layers of the provided neural network, decomposes (**S120**) the one or more sub-neurons into one or more first subsets and one or more second subsets. Each of the one or more second subsets is associated to one of the one or more first subsets. Equivalently, a first subset is associated to one or more second subsets. A value of the weight(s) of sub-neuron(s) in each second subset is substantially equal to a value of weights of the respective sub-neurons in the associated first subset. A first subset and the associated one or more second subsets may correspond to a same subset of the one or more input channels and to a different subset of the one or more output channels. In other words, each of a first subset and the associated one or more second subset may share the inputs from a subset of the one or more input channels and to output some value in different output channels. By "respective sub-neurons in the associated first subset" it is meant the sub-neurons in the associated first subset corresponding to a same input channel, i.e., each two respective sub-neurons in the first and an associated second subset correspond to a same input channel of the one or more input channels.

By "substantially equal" it is meant that a difference between the value of the weights of a first subset and the value of weight of its associated one or more second subsets are smaller than a threshold. The difference may be measured in any known norms, for example an L2 norm. The threshold may be a small value, for example a value equal or smaller than $10^{-2}$, $10^{-3}$ or $10^{-6}$.

In examples, each of the first subsets and the one or more associated second subsets may comprise one or more sub-neurons, thereby, and as discussed above, each the first subsets and the one or more associated second subsets forms a sub-neuron outputting an intermediate output contributing to an output channel. Consequently, the intermediate output of each of the first subsets and the one or more associated second subsets (which formed by one or more sub-neurons) may be a sum of intermediate outputs of the sub-neurons forming the (first or second) subset.

For each of the one or more second subsets, the method removes **(S130)** the second subset of the sub-neurons from the layer. By removing it is meant removing respective weights and mathematical operation(s) of the second subset of sub-neuron(s). The method then replaces **(S140)** an intermediate output of the second subset by an intermediate output of the associated first subset. The intermediate output of the second subset corresponds to the intermediate output of the respective sub-neurons of the second subset and the intermediate output of the first subset corresponds to the intermediate output of the respective sub-neurons of the first subset. By "replacing an intermediate output of the second subset by a substitute of an intermediate output of the associated first subset" it is meant that the method uses the intermediate output of the associated first subset as the intermediate output of the second subset.

In examples where each of the first subsets and the associated one or more second subsets may correspond to a same subset of the one or more input channels, a value of the intermediate output of each of the one or more second subset is substantially equal to a value of the intermediate output of the associated first subset as the input to each of the first subset and the associated one or more second subsets as well as the weights are (substantially) equal.

The steps of removing **(S130)** and replacing **(S140)** do not substantially change the one or more outputs of the one or more layers compared to original one or more original layers of the provided trained neural network. The pruned (or split) trained neural network does not introduce change in computations performed by sub-neurons as the method only removes redundancies identified by using values of weights of the provided trained neural network.

In examples, the providing of a trained neural network may comprise hashing the one or more weights of each of the sub-neurons. As known per se by "hashing the one or more weights of each of the sub-neurons" it is meant applying a hash function to the one or more weights of each of the sub-neurons and using their hash values, i.e., an output of the hash function, as indices directly. The hashing may be performed according to any known method in the art. The hash values may be binary, float or integer values. In examples, the hashing the one or more weights of each of the sub-neurons comprises discretizing each of the one or more weights, i.e., obtaining a discrete value for each of the one or more weights. This constitutes an improved solution for pruning the provided neural network as the hashing the one or more weights of each of the sub-neurons reduces the number of possible values for the weights, thereby enables the method to more efficiently decomposes the one or more sub-neurons into one or more first subsets and one or more second subsets. In other words, the hashing increases the number of redundant weight values of the neural network, thus increases the number of substantially equal value(s) of the weight(s) of sub-neuron(s).

In examples, the sub-neurons of each of the one or more first subsets and each of the respective one or more second subsets may correspond to a single input channel. In other words, the method decomposes the one or more sub-neurons corresponding to a single input channel (i.e., decomposing per input). This constitutes an improved solution as the number of decompositions grows exponentially with the number of input channels decomposing the sub-neurons for each of the input channels provides a deterministic and efficient manner of decomposing. In particular, such a decomposition is optimal according to a criterion of the number of operations (e.g., multiplications in the case of fully connected layers or convolutions in the case convolutional layers). As illustrated in **FIGs. 3(B)-(C)** the method may decompose the network **310** per input (column-wise) and compare the weights of sub-neurons for each input (i.e., one block of each column). The method may then remove the second subset of the sub-neurons from the layer (compare the removed part **332** in **FIG. 3(B)** and **FIG. 3(C))** and may replace an intermediate output of the second subset by a substitute of an intermediate output of the associated first subset. The replacing by substitutes is illustrated in **FIG. 3(C)** with arrows. The direction of each arrow represents a source and a destination for the replacing, i.e., the first and the associated one or more second subsets, respectively.

In reference to the flowchart of **FIG. 2,** the replacing an intermediate output of the second subset by a substitute of an intermediate output of the associated first subset may comprise creating **(S210)** a list for each of the one or more first subsets. The list may comprise one or more elements each corresponding to one of the one or more associated second subsets. Each element of the list may comprise the substitute of the intermediate output of the associated first subset, and a reference to a corresponding output channel. The method may further comprise, for each of the one or more layers of the split neural network, determining **(S220)** if a first list for a first element from the one or more first subsets equals to a second list for a second element from the one or more first subsets, then replacing **(S230)** the second list by a substitute of the first list. Equality between two lists means substitution(s) of the two lists are the same. Such a replacing of the second list by a substitute of the first list when the second list is equal to the first list further prunes the neural network by a column-wise comparison of the split network, thereby further improves the computational performance of the neural network in the deployment. As illustrated in **FIG. 3(C)**, as the first two columns **336** of the neural network **310** share the substitution **332** (as the respective weights $\overline{W}^l_{[:,:,1,:]}$ and $\overline{W}^l_{[:,:,2,:]}$ have substantially equal values for all the respective sub-neurons) the method replaces the list of the second column by a substitute of the respective list of the first column.

The replacing an intermediate output of the second subset by a substitute of an intermediate output of the respective first subset comprises storing the respective intermediate output of the first subset in a memory. This provides an improved solution as performing mathematical operations to obtain the respective intermediate output of a sub-neuron may require more computational resources than a memory allocation for replacing an intermediate output of the second subset by a substitute or access of an intermediate output of the associated first subset by a memory allocation. In examples, the storing comprises a memory allocation in CPU primary storage (also known as main memory, internal memory, cache memory or prime memory) and often referred to simply as memory. This improves the performance of the split neural network at inference as the CPU has direct access to the CPU memory and continuously reads instructions stored there and executes them as required. Any data actively operated on is also stored in the CPU memory in uniform manner. In other examples, the storing comprises a memory allocation in GPU memory.

Each of the mathematical operations may be an addition or a multiplication. The new layers use regular mathematical operations and memory access which mathematically correspond to function compositions. All these steps are derivable and thus are eligible for gradient descent optimization. In other words the resulting neural network can be trained from scratch instead of being extracted from an already trained one.

In examples, at least one of the one or more layers may be a convolutional layer or a fully connected layer. In examples where the layer is a convolutional layer each sub-neuron may comprise one or more convolutional kernels. Each of the one or more convolutional kernels may correspond to an input channel. Alternatively or additionally, each of the one or more layers is a depthwise convolutional layer.

In examples, the method further may comprise fine-tuning the split neural network. In such examples, after the provided neural network being split, the method fine-tunes the split neural network by a fine-tuning method, for example a data-driven fine-tuning. According to such examples, the fine-tuning comprises further training the split neural network using labelled training data. The method may further comprises providing a fine-tuning training dataset. The method may perform such a training by any known supervised learning method on the provided fine-tuning training dataset. Alternatively or additionally, the fine tuning may comprise further training the split neural network using un-labelled training data. The further training of the split neural network using un-labelled training data may comprise distillation of the split neural network by the provided neural network on the un-labelled training data. In such examples, the method may further comprise providing an un-labelled training dataset for the distillation. The method may perform the distillation of the split network according to any known distillation method. The method may perform the distillation of the split network (using un-labelled training data) before or after the further training of the split neural network using labelled training data.

In examples, the method further comprises optimizing an architecture of the split neural network using a Neural Architecture Search (NAS). As known per se, the optimizing an architecture of the split neural network using NAS consists in finding the best neural architecture (i.e., best building blocks and connection between the building blocks) inside a search space. The search space is defined using elementary building layers. The method may perform the NAS optimization before or after the fine-tuning of the split neural network. This constitutes an improved solution as the layers of the split neural network may define novel searching spaces for NAS optimization leading to further optimization of the architecture for example with respect to run-time efficiency.

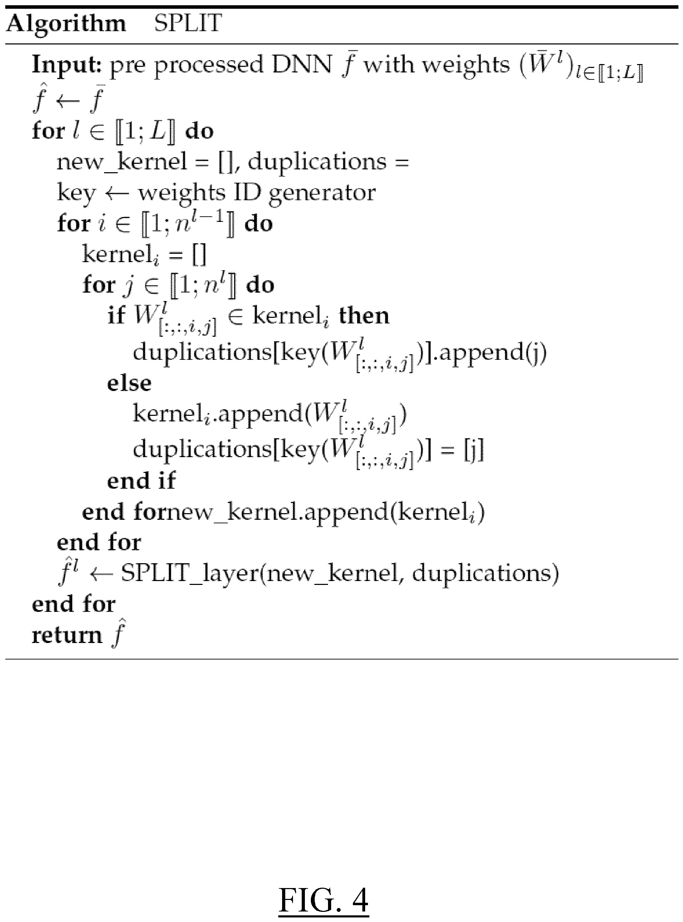

Examples of implementations of the method and some results obtained by said implementations are now discussed with reference to **FIGs. 4** to **9.**

The implementations use Scikit-learn python library. The split step is implemented using Numpy. The implementations are performed on an Intel(R) Core(TM) i7-7820X CPU. The hashing step is the bottleneck, and its processing time depends on the model's size, ranging from a few seconds for smaller models suited for CIFAR-10 and up to a day for a wider networks designed for ImageNet. The pruning steps (i.e., split) only require a few minutes in the worst-case scenario, and do not exceed half an hour. In some variations, an acceleration via a layer-wise parallelization is optionally applicable.

An example algorithm (referred to as SPLIT) of the implementations of the method is presented in **FIG. 4.** In the SPLIT algorithm, a deep neural network comprising some weights is provided to the method. The provided neural network comprises L layers, $n^{l-1}$input channels, and $n^l$ output channels. The implementations then, for each of the layer $l \in [1, L]$, decompose the sub-neurons into the first subsets and associated second subsets by comparing two sub-neurons $\overline{W}^l_{[:,:,i,j]}$ sharing the $i$ index, i.e., corresponding to the same input channel. The algorithm adds each of the first subsets to the *kernel$_i$* for the respective input channel and adds the substitutions to a respective substitution list.

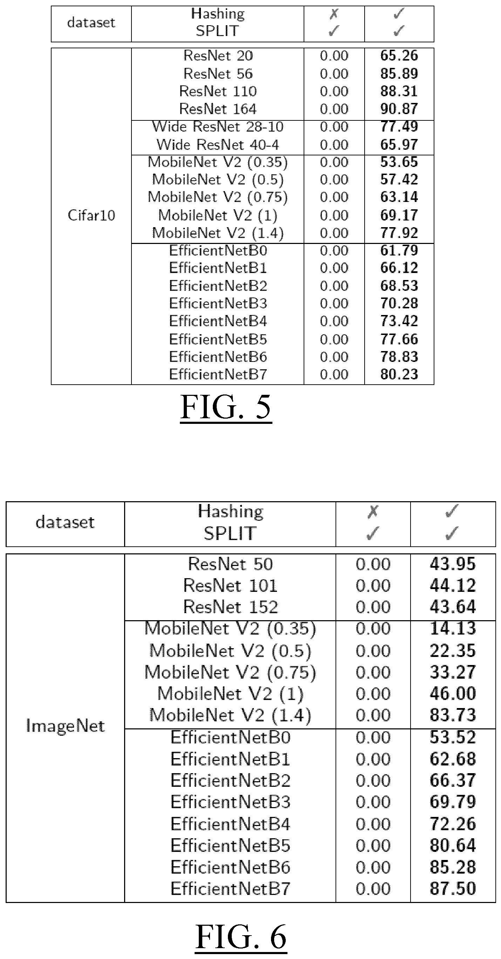

In the implementations, a pruning factor is defined as the proportion of removed parameters (i.e., weights) from the original model (e.g., a pruning factor of 100% indicates that the entire network was pruned). The ablation study is presented in **FIGs. 5** and **6.** Each column corresponds to the pruning factor of a different set-up in order to validate the role of each step, i.e., the optional hashing and the split. The first observation (first column) validates the use of hashing by removing it, which corresponds to no approximation made on the predictive function, i.e., no hashing and no relaxation of merging. No pruning can be performed in such instance. The last columns in **FIGs. 5** and **6** show that SPLIT does most of the heavy work especially on more challenging architectures (MobileNet and EfficientNet) and more challenging tasks (ImageNet). From the results it is clear that the implementations heavily rely on the hashing preprocess without which almost no pruning can be done. Also, SPLIT is responsible for most of the pruning and is robust to both the architecture and the task systematically achieving more than 60% pruning without accuracy loss except on harder to hash networks e.g., small MobileNets on ImageNet.

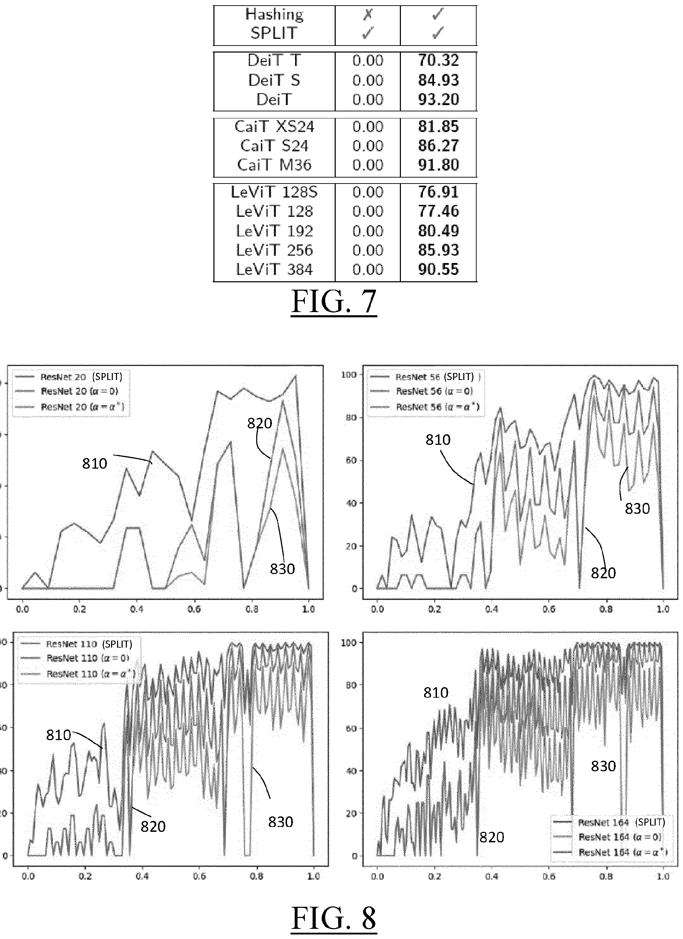

The implementations of the method may comprise implementing SPLIT on some neural networks which rely heavily on fully connected layers as Image Transformers DeiT, CaiT and LeViT to observe the performance. For DeiT the base model as well as the small (S) and Tiny (T) versions with input shape 224 are considered. For CaiT, a Cait Extra Small (XS24), Small (S24) and Cait Medium (M36) and depth 24 and 36 respectively (Cait XS24, Cait S24 and Cait M36) are considered. As known per se, Levit has been introduced as an inference-wise efficient Image Transformer with five scales, 128S, 128, 92, 256 and 384. The relevant ablation study results are reported in **FIG. 7.**

Further, a study of the pruning ratios of several networks for CifarlO across different layer's depths (mentioned in the legend of each plot) is illustrated in **FIG. 8.** In each of the plots of **FIG. 8,** plot **810** presents the performance of the SPLIT algorithm in comparison with two variations of algorithm, one with a parameter $\alpha = 0$ (algorithm MERGE with an unoptimized parameter) in plots **830** and a parameter $\alpha = \alpha^*$ (algorithm MERGE with a relaxed parameter) in plots **820**. The algorithm MERGE is an algorithm according to the already-cited document Yvinec et al., "RED: Looking for Redundancies for Data-Free Structured Compression of Deep Neural Networks", arXiv:2105.14797, May 2021. The results show that the deeper the layer the lower the compression. The SPLIT's performance in **FIG. 8** shows that, unlike the **820** and **830** curves which regularly go down to zero the SPLIT (**810** curve) does not. In other words, while the two variations of the SPLIT algorithm struggle with some layers due to their positive in the network because of DNN architecture the SPLIT algorithm does not. This is because of the fact that in residual block some layers are not pruned, typically the last layer of the block; however, the definition of the SPLIT does not impact the consecutive layer of the pruned layer.

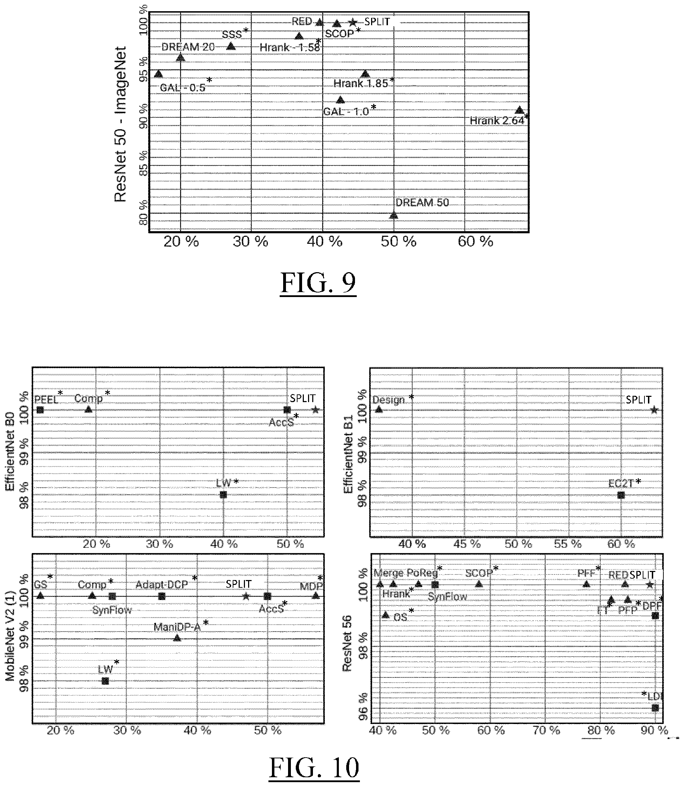

**FIGs.** 9 and **10** compares implementations of the method (denoted by SPLIT in the figures) with the state-of-the-art pruning algorithms based on the percentage of removed parameters and preservation of the accuracy measured as a proportion of the base model performance. The results for some common architectures like ResNets on Cifar10 and ImageNet are reported. **FIG. 9** shows a comparison of performance between several structured pruning state-of-the-art pruning methods and an example of the disclosed pruning method (SPLIT) on the canonical benchmark Resnet 50 on ImageNet and **FIG. 10** shows a comparison of performance between several structured pruning state-of-the-art pruning methods and an example of the disclosed pruning method (SPLIT) on the canonical benchmark MobileNet (ImageNet), EfficientNets (ImageNet) and ResNet 56 (Cifar10).

The referenced methods are classified based on two criteria which constrain the pruning performance. First, usage of data, characterized by the asterisk in **FIGs. 9** and **10**. The data-driven algorithms are shown with an asterisk besides their names the data-free algorithms without such an asterisk. The second classification previously discussed is the sparsity of the resulting network, the structured approaches are shown as triangle and unstructured approaches are shown in square. The SPLIT algorithm is data-free and block structured pruning which is a hybrid form of structured and unstructured. As shown on **FIG. 9,** the SPLIT outperforms other methods for both data-free and data-driven pruning when assuming a structured approach in the high accuracy regime. Further, the SPLIT improves the previous state-of-the-art on this benchmark by 10%, outperforming RED. Nonetheless, the gap with data-driven unstructured pruning and data-free pruning remains consequent on that benchmark.

On the other considered benchmark, the performances of the implementations are even more remarkable. For ResNet 56 on Cifar10, as shown in **FIG. 10** bottom right corner, SPLIT outperforms state-of-the-art pruning algorithms regardless of the constraints on structure and data usage. Compared to the methods preserving the accuracy as well as other data-free approaches, SPLIT improves the pruning ratio by 5%. Compared to the pruning methods that allow for accuracy drop, SPLIT achieves similar performance without said accuracy drop. All in all, SPLIT performs well on ResNet-like architectures for the two tasks.

The SPLIT performs even better on architectures which contain mostly $1 \times 1$ convolution as it is the case for MobileNets and EfficientNets. As shown in **FIG. 10** (top row), on both EfficientNet B0 and EfficientNet B1 which are relatively new benchmarks, SPLIT reaches pruning ratios that tower previous works. For instance, on EfficientNet B1, SPLIT improves by 71.7% upon Design. In **FIG. 10** bottom left corner, SPLIT vastly outperforms data-free approaches with a boost of 68% in pruning ratio. However, data-free methods still struggle to outperform data-driven ones, with AccS and MDP which employ heavy re-training schemes to achieve 6% and 17% better results than SPLIT respectively, assuming a data-free hashing method has been used on the input DNN, for example the hashing method proposed in the already-cited document Yvinec et al., "RED: Looking for Redundancies for Data-Free Structured Compression of Deep Neural Networks", arXiv:2105.14797, May 2021. Nonetheless, if the study is restrained to data-free and low-data data-driven references, then SPLIT, with the data-free hashing, achieves the best performance on MobileNet with its second being Adapt-DCP having a 34% lower pruning rate.

These comparisons validate SPLIT as the most effective data-free pruning algorithm. This result is even more marked on already efficient architectures such as MobileNet and small EfficientNets.

Computerized devices may be suitably designed for implementing embodiments of the present invention as described herein. In that respect, it may be appreciated that the methods described herein are largely non-interactive and automated. In exemplary embodiments, the methods described herein may be implemented either in an interactive, partly interactive or non-interactive system. The methods described herein may be implemented in software (e.g., firmware), hardware, or a combination thereof. In exemplary embodiments, the methods described herein are implemented in software, as an executable program, the latter executed by suitable digital processing devices. In further exemplary embodiments, at least one step or all steps of the methods may be implemented in software, as an executable program, the latter executed by suitable digital processing devices. More generally, embodiments of the present invention may be implemented wherein general-purpose digital computers, such as personal computers, workstations, etc., are used.

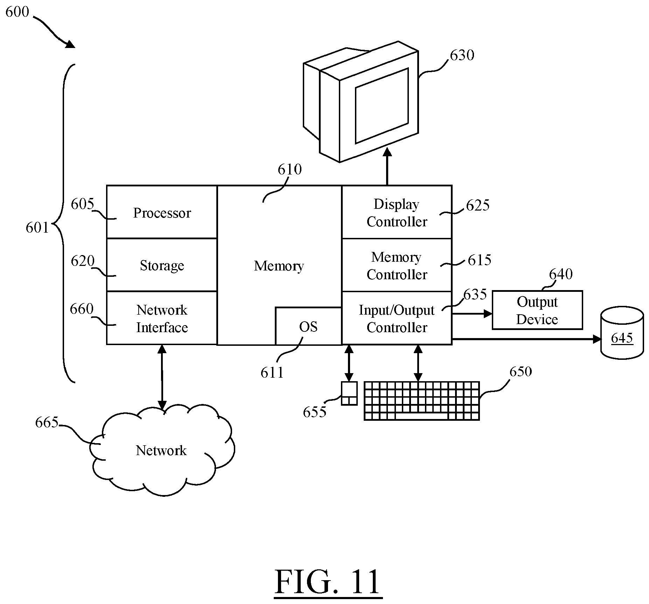

For instance, the system **600** depicted in **FIG. 11** schematically represents a computerized unit **601**, e.g., a general-purpose computer. In exemplary embodiments, in terms of hardware architecture, as shown in **FIG. 11**, the unit **601** includes a processor **605**, memory **610** coupled to a memory controller **615**, and one or more input and/or output (I/O) devices **640, 645, 650, 655** (or peripherals) that are communicatively coupled via a local input/output controller 635. Further, the input/output controller **635** may be, but is not limited to, one or more buses or other wired or wireless connections, as is known in the art. The input/output controller **635** may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor **605** is a hardware device for executing software, particularly that stored in memory **610.** The processor **605** may be any custom made or commercially available processor, a central processing unit (CPU), an auxiliary processor among several processors associated with the computer **601,** a semiconductor-based microprocessor (in the form of a microchip or chip set), or generally any device for executing software instructions.

The memory **610** may include any one or combination of volatile memory elements (e.g., random access memory) and nonvolatile memory elements. Moreover, the memory **610** may incorporate electronic, magnetic, optical, and/or other types of storage media. Note that the memory **610** may have a distributed architecture, where various components are situated remote from one another, but may be accessed by the processor **605.**

The software in memory **610** may include one or more separate programs, each of which comprises an ordered listing of executable instructions for implementing logical functions. In the example of **FIG. 11,** the software in the memory **610** includes a method described herein in accordance with exemplary embodiments and a suitable operating system (OS) **611.** The OS **611** essentially controls the execution of other computer programs, it being noted that methods described herein may be partly implemented as application program, and provides scheduling, input-output control, file and data management, memory management, and communication control and related services.

The methods described herein may be in the form of a source program, executable program (object code), script, or any other entity comprising a set of instructions to be performed. When in a source program form, then the program needs to be translated via a compiler, assembler, interpreter, or the like, as known *per se,* which may or may not be included within the memory 610, so as to operate properly in connection with the OS 611. Furthermore, the methods may be written as an object-oriented programming language, which has classes of data and methods, or a procedure programming language, which has routines, subroutines, and/or functions.

Possibly, a conventional keyboard **650** and mouse **655** may be coupled to the input/output controller **635.** Other I/O devices **640-655** may include sensors (especially in the case of network elements), i.e., hardware devices that produce a measurable response to a change in a physical condition like temperature or pressure (physical data to be monitored). Typically, the analog signal produced by the sensors is digitized by an analog-to-digital converter and sent to controllers **635** for further processing. Sensor nodes are ideally small, consume low energy, are autonomous and operate unattended.

In addition, the I/O devices **640** - **655** may further include devices that communicate both inputs and outputs. The system **600** may further include a display controller **625** coupled to a display **630.** In exemplary embodiments, the system **600** may further include a network interface or transceiver **660** for coupling to a network **665.**

The network **665** transmits and receives data between the unit **601** and external systems. The network **665** is possibly implemented in a wireless fashion, e.g., using wireless protocols and technologies, such as WiFi, WiMax, etc. The network **665** may be a fixed wireless network, a wireless local area network (LAN), a wireless wide area network (WAN) a personal area network (PAN), a virtual private network (VPN), intranet or other suitable network system and includes equipment for receiving and transmitting signals.

The network **665** may also be an IP-based network for communication between the unit 601 and any external server, client, and the like via a broadband connection. In exemplary embodiments, network **665** may be a managed IP network administered by a service provider. Besides, the network **665** may be a packet-switched network such as a LAN, WAN, Internet network, etc.

If the unit **601** is a PC, workstation, intelligent device or the like, the software in the memory **610** may further include a basic input output system (BIOS). The BIOS is stored in ROM so that the BIOS may be executed when the computer **601** is activated.

When the unit **601** is in operation, the processor **605** is configured to execute software stored within the memory **610,** to communicate data to and from the memory **610,** and to generally control operations of the computer **601** pursuant to the software. The method described herein and the OS **611,** in whole or in part are read by the processor **605,** typically buffered within the processor **605,** and then executed. When the methods described herein are implemented in software, the methods may be stored on any computer readable medium, such as storage **620,** for use by or in connection with any computer related system or method.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.) or an embodiment combining software and hardware aspects. Furthermore, aspects of the present invention may take the form of a computer program product embodied in one or more computer readable medium(s) having computer readable program code embodied thereon. Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that may contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, C++, or the like and conventional procedural programming languages, such as the "C" programming language or similar programming languages. The program code may execute entirely on the unit **601,** partly thereon, partly on a unit **601** and another unit **601,** similar or not.

Aspects of the present invention are described above with reference to flowchart illustrations and/or block diagrams of methods, apparatus (systems) and computer program products according to embodiments of the invention. It will be understood that each block of the flowchart illustrations and/or block diagrams may be implemented by one or more computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The computer program may be recordable on any data storage medium, including the memory of the system. The program may for example be implemented in processing circuitry, or in computer hardware, firmware, software, or in combinations of them. The processing circuitry is adapted to execute the program, e.g. the processing circuitry is programmed to execute the method steps. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved and algorithm optimization. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

More generally, while the present invention has been described with reference to certain embodiments, it will be understood by those skilled in the art that various changes may be made, and equivalents may be substituted without departing from the scope of the present invention. In addition, many modifications may be made to adapt a particular situation to the teachings of the present invention without departing from its scope. Therefore, it is intended that the present invention not to be limited to the particular embodiments disclosed, but that the present invention will include all embodiments falling within the scope of the appended claims.

**Claims**

1. A computer-implemented method for pruning a neural network comprising one or more layers, each of the one or more layers comprising one or more input channels and one or more output channels, each of the one or more layers comprising one or more sub-neurons each comprising one or more mathematical operations and one or more respective weights, each sub-neuron corresponding to a subset of the one or more input channels and outputting an intermediate output contributing to an output channel by an application of the one or more mathematical operations on the subset of the one or more input channels according to the respective one or more weights, the method comprising:

    • Providing (S110) a trained neural network;
    • for each of the one or more layers of the provided neural network:

        ∘ decomposing (S120) the one or more sub-neurons into one or more first subsets and one or more second subsets each associated to one of the one or more first subsets, wherein a value of the weight(s) of sub-neuron(s) in each second subset is substantially equal to a value of weights of the respective sub-neurons in the associated first subset; and
        ∘ for each of the one or more second subsets, splitting the trained neural network, the splitting comprising:

            ▪ removing (S130) the second subset of the sub-neurons from the layer; and
            ▪ replacing (S140) an intermediate output of the second subset by a substitute of an intermediate output of the associated first subset, wherein the intermediate output of the second subset corresponds to the intermediate output of the respective sub-neurons of the second subset and the intermediate output of the first subset corresponds to the intermediate output of the respective sub-neurons of the first subset.

2. The method of claim 1, wherein the providing a trained neural network comprises hashing the one or more weights of each of the sub-neurons, preferably the hashing the one or more weights of each of the sub-neurons comprises discretizing each of the one or more weights.

3. The method of any of claims 1 to 2, wherein the sub-neurons of each of the one or more first subsets and each of the respective one or more second subsets correspond to a single input channel.

4. The method of claim 3, wherein the replacing an intermediate output of the second subset by a substitute of an intermediate output of the associated first subset comprises creating a list for each of the one or more first subsets, the list comprising one or more elements each corresponding to one of the one or more associated second subsets, each element of the list comprising:

    • replacing the substitute of the intermediate output of the associated first subset; and
    • a reference to a corresponding output channel.

5. The method of claim 4, wherein the method further comprises, for each of the one or more layers of the split neural network:

    ◦ determining if a first list for a first element from the one or more first subsets equals to a second list for a second element from the one or more first subsets, then replacing the second list by a substitute of the first list.

6. The method of any of claims 1 to 5, wherein the replacing an intermediate output of the second subset by a substitute of an intermediate output of the respective first subset comprises storing the respective intermediate output of the first subset in a memory.

7. The method of any of claims 1 to 6, wherein each of the mathematical operations is an addition or a multiplication.

8. the method of any of claims 1 to 7, wherein at least of the one or more layers is a convolutional layer or a fully connected layer.

9. The method of any of claims 1 to 8, wherein the method further comprises fine-tuning the split neural network.

10. The method of claim 9, wherein the fine-tuning comprises further training the split neural network using labelled training data.

11. The method of any of claims 9 or 10, wherein the fine tuning comprises further training the split neural network using un-labelled training data, the training comprises distillation of the split neural network by the provided neural network on the un-labelled training data.

12. The method of any of claims 1 to 11, wherein the method further comprises optimizing an architecture of the split neural network using a Neural Architecture Search (NAS).

13. A computer program comprising instructions for performing the method according to any one of claims 1 to 12.

14. A processing circuitry configured to carry out the computer program of claim 13.

15. A system comprising a processor coupled to a memory and, the memory having recorded thereon the computer program of claim 13.

provide a trained neural network

S110

decompose the one or more sub-neurons into one or more first subsets and one or more second subsets each associated to one of the one or more first subsets, wherein a value of the weight(s) of sub-neuron(s) in each second subset is substantially equal to a value of weights of the respective sub-neurons in the associated first subset

S120

remove the second subset of the sub-neurons from the layer

S130

replace an intermediate output of the second subset by a substitute of an intermediate output of the associated first subset, wherein the intermediate output of the second subset corresponds to the intermediate output of the respective sub-neurons of the second subset and the intermediate output of the first subset corresponds to the intermediate output of the respective sub-neurons of the first subset

S140

# FIG. 1

create a list for each of the one or more first subsets, the list comprising one or more elements each corresponding to one of the one or more associated second subsets

S210

determine if a first list for a first element from the one or more first subsets equals to a second list for a second element from the one or more first subsets

S220

duplicate the second list by the first list

S230

# FIG. 2

FIG. 3

---

**Algorithm** SPLIT

---

**Input:** pre processed DNN $\bar{f}$ with weights $(\bar{W}^l)_{l \in [\![1;L]\!]}$

$\hat{f} \leftarrow \bar{f}$

**for** $l \in [\![1; L]\!]$ **do**

   new_kernel = [], duplications =

   key $\leftarrow$ weights ID generator

   **for** $i \in [\![1; n^{l-1}]\!]$ **do**

     kernel$_i$ = []

     **for** $j \in [\![1; n^l]\!]$ **do**

       **if** $W^l_{[:,:,i,j]} \in$ kernel$_i$ **then**

         duplications[key($W^l_{[:,:,i,j]}$)].append(j)

       **else**

         kernel$_i$.append($W^l_{[:,:,i,j]}$)

         duplications[key($W^l_{[:,:,i,j]}$)] = [j]

       **end if**

     **end for**new_kernel.append(kernel$_i$)

   **end for**

   $\hat{f}^l \leftarrow$ SPLIT_layer(new_kernel, duplications)

**end for**

**return** $\hat{f}$

---

# FIG. 4

| dataset | Hashing SPLIT | ✗ ✓ | ✓ ✓ |
|---------|---------------|------|------|
| Cifar10 | ResNet 20 | 0.00 | 65.26 |
|  | ResNet 56 | 0.00 | 85.89 |
|  | ResNet 110 | 0.00 | 88.31 |
|  | ResNet 164 | 0.00 | 90.87 |
|  | Wide ResNet 28-10 | 0.00 | 77.49 |
|  | Wide ResNet 40-4 | 0.00 | 65.97 |
|  | MobileNet V2 (0.35) | 0.00 | 53.65 |
|  | MobileNet V2 (0.5) | 0.00 | 57.42 |
|  | MobileNet V2 (0.75) | 0.00 | 63.14 |
|  | MobileNet V2 (1) | 0.00 | 69.17 |
|  | MobileNet V2 (1.4) | 0.00 | 77.92 |
|  | EfficientNetB0 | 0.00 | 61.79 |
|  | EfficientNetB1 | 0.00 | 66.12 |
|  | EfficientNetB2 | 0.00 | 68.53 |
|  | EfficientNetB3 | 0.00 | 70.28 |
|  | EfficientNetB4 | 0.00 | 73.42 |
|  | EfficientNetB5 | 0.00 | 77.66 |
|  | EfficientNetB6 | 0.00 | 78.83 |
|  | EfficientNetB7 | 0.00 | 80.23 |

# FIG. 5

| dataset | Hashing SPLIT | ✗ ✓ | ✓ ✓ |
|---------|---------------|------|------|
| ImageNet | ResNet 50 | 0.00 | 43.95 |
|  | ResNet 101 | 0.00 | 44.12 |
|  | ResNet 152 | 0.00 | 43.64 |
|  | MobileNet V2 (0.35) | 0.00 | 14.13 |
|  | MobileNet V2 (0.5) | 0.00 | 22.35 |
|  | MobileNet V2 (0.75) | 0.00 | 33.27 |
|  | MobileNet V2 (1) | 0.00 | 46.00 |
|  | MobileNet V2 (1.4) | 0.00 | 83.73 |
|  | EfficientNetB0 | 0.00 | 53.52 |
|  | EfficientNetB1 | 0.00 | 62.68 |
|  | EfficientNetB2 | 0.00 | 66.37 |
|  | EfficientNetB3 | 0.00 | 69.79 |
|  | EfficientNetB4 | 0.00 | 72.26 |
|  | EfficientNetB5 | 0.00 | 80.64 |
|  | EfficientNetB6 | 0.00 | 85.28 |
|  | EfficientNetB7 | 0.00 | 87.50 |

# FIG. 6

| Hashing | ✗ | ✓ |
|---|---|---|
| SPLIT | ✓ | ✓ |
| DeiT T | 0.00 | **70.32** |
| DeiT S | 0.00 | **84.93** |
| DeiT | 0.00 | **93.20** |
| CaiT XS24 | 0.00 | **81.85** |
| CaiT S24 | 0.00 | **86.27** |
| CaiT M36 | 0.00 | **91.80** |
| LeViT 128S | 0.00 | **76.91** |
| LeViT 128 | 0.00 | **77.46** |
| LeViT 192 | 0.00 | **80.49** |
| LeViT 256 | 0.00 | **85.93** |
| LeViT 384 | 0.00 | **90.55** |

# FIG. 7

# FIG. 8

FIG. 9

FIG. 10

600

601

605 Processor

610

630

625 Display Controller

620 Storage

Memory

615 Memory Controller

660 Network Interface

611 OS

635 Input/Output Controller

640 Output Device

645

665 Network

655

650

# FIG. 11

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EDOUARD YVINEC ET AL: "RED : Looking for Redundancies for Data-Free Structured Compression of Deep Neural Networks", ARXIV.ORG, CORNELL UNIVERSITY LIBRARY, 201 OLIN LIBRARY CORNELL UNIVERSITY ITHACA, NY 14853, 31 May 2021 (2021-05-31), XP081972164, * page 1 - page 15, paragraph 2 * ----- | 1-15 | INV. G06N3/08 ADD. G06N3/04 |
| A | ZHONG GUOQIANG ET AL: "Merging Similar Neurons for Deep Networks Compression", COGNITIVE COMPUTATION, NEW YORK, N.Y. : SPRINGER, US, vol. 12, no. 3, 16 January 2020 (2020-01-16), pages 577-588, XP037163417, ISSN: 1866-9956, DOI: 10.1007/S12559-019-09703-6 [retrieved on 2020-01-16] * the whole document * ----- | 1-15 | |
| A | Song Han ET AL: "Learning both Weights and Connections for Efficient Neural Networks", , 30 October 2015 (2015-10-30), XP055396330, Retrieved from the Internet: URL:https://arxiv.org/pdf/1506.02626.pdf [retrieved on 2017-08-04] * the whole document * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 25 January 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 21 30 6096

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Song Han ET AL: "A Deep Neural Network Compression Pipeline: Pruning, Quantization, Huffman Encoding", , 1 October 2015 (2015-10-01), pages 1-11, XP055378073, Retrieved from the Internet: URL:https://arxiv.org/pdf/1510.00149v1.pdf [retrieved on 2017-06-01] * the whole document * ----- | 1-15 | |
| A | US 2021/110269 A1 (GOBRIEL SAMEH [US] ET AL) 15 April 2021 (2021-04-15) * the whole document * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 25 January 2022 | Volkmer, Markus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 30 6096

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2022

| Patent document cited in search report | Publication date | Patent family member(s) | Publication date |
|---|---|---|---|
| US 2021110269 A1 | 15-04-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YVINEC et al.** RED: Looking for Redundancies for Data-Free Structured Compression of Deep Neural Networks. *arXiv:2105.14797,* May 2021

- **SRINIVAS ; BABU.** Data-free Parameter Pruning for Deep Neural Networks. *British Machine Vision Conference (BMVC),* 2015